# EUROPÄISCHE PATENTSCHRIFT

(11) **EP 0 622 882 B1**
(45) Veröffentlichungstag und Bekanntmachung des Hinweises auf die Patenterteilung: **13.03.1996**
(21) Anmeldenummer: 93107092.4
(22) Anmeldetag: 30.04.1993
(51) Int. Cl.: H02J 9/06

(54) **Verfahren und Schaltungsanordnung zum Überwachen einer eine Zwischenkreisspannung und eine Akkuspannung entkoppelnden Diode in einer batteriegepufferten Stromversorgungseinheit**
Method and device to control the voltage of a decoupling diode between an intermediate circuit and battery in a power supply with buffer battery
Méthode et dispositif de contrôle de tension d'une diode de découplage entre un circuit intermédiaire et une batterie dans une alimentation avec batterie tampon

(43) Veröffentlichungstag der Anmeldung: 02.11.1994
(73) Patentinhaber: Siemens Nixdorf Informationssysteme Aktiengesellschaft, D-33102 Paderborn (DE)
(72) Erfinder: Busch, Peter, W-8900 Augsburg (DE); Sterzik, Willi, W-8900 Augsburg (DE)
(74) Vertreter: Fuchs, Franz-Josef, Dr.-Ing.

(56) Entgegenhaltungen:
- EP-A- 0 375 793
- EP-A- 0 460 888
- WO-A-87/07782
- US-A- 4 225 792
- US-A- 5 142 215

## Beschreibung

Verfahren und Schaltungsanordnung zum Überwachen einer eine Zwischenkreisspannung und eine Akkuspannung entkoppelnden Diode in einer batteriegepufferten Stromversorgungseinheit

Die Erfindung betrifft ein Verfahren und eine Schaltungsanordnung zum Überwachen einer eine Zwischenkreisspannung und eine Akkuspannung entkoppelnden Diode in einer eine Zwischenkreisspannung und eine Akkuspannung als Pufferspannung aufweisenden batteriegepufferten Stromversorgungseinheit gemäß der Oberbegriffe der Ansprüche 1 und 3.

Bei Stromversorgungseinheiten mit batteriegepuffertem Zwischenkreis wird die Akkuspannung eines Akkumulators normalerweise über ein Relais und eine Entkoppeldiode an die Zwischenkreisspannung angeschlossen. Bei vorhandener Netzspannung erzeugt ein AC/DC-Wandler die Zwischenkreisspannung. Diese Spannung ist in diesem Fall größer als die Akkuspannung. Dadurch befindet sich die Entkoppeldiode in einem Sperrzustand und es fließt nur ein kleiner Ladestrom für den Akkumulator über eine Ladeschaltung. Die Zwischenkreisspannung versorgt weiterhin vorhandene DC/DC-Wandler. Das Relais wird je nach vorliegendem Konzept beim Anliegen der Netzspannung oder nur während des Betriebs der vorhandenen DC/DC-Wandler eingeschaltet.

Ein Problem ergibt sich im Fehlerfall, wenn die Entkoppeldiode durch Kurzschluß ausfällt. Der Ladestrom des Akkus wird dann nicht mehr durch die Ladeschaltung, sondern durch eine Strombegrenzung im AC/DC-Wandler bestimmt. Dieser Strom kann zu einer Überladung und eventuell zu einer Explosion oder zu einem Brand des Akkumulators führen.

Gemäß einer bekannten Lösung zur Vermeidung dieser Probleme wird eine exemplarische Temperaturüberwachung einer einzigen Akkumulatorzelle durchgeführt und bei Überschreiten einer vorbestimmten Temperatur das Relais abgeschaltet, wodurch der Akkumulator abgeschaltet wird. Damit werden aber nur die Folgen einer defekten Entkoppeldiode begrenzt, aber nicht die Ursache bekämpft.

Aufgabe der Erfindung ist es daher, ein Verfahren und eine Schaltungsanordnung zum Überwachen einer eine Zwischenkreisspannung und eine Akkuspannung entkoppelnden Diode in einer eine Zwischenkreisspannung und eine Akkuspannung als Pufferspannung aufweisenden batteriegepufferten Stromversorgungseinheit der eingangs genannten Art anzugeben, durch die ein Überladen des Akkumulators verhindert wird, so daß die erwähnten Gefahren bezüglich des Akkumulators nicht mehr bestehen.

Gelöst wird diese Aufgabe für das Verfahren durch die im kennzeichnenden Teil des Anspruchs 1 angegebenen Merkmale. Für die Schaltungsanordnung wird diese Aufgabe durch die im kennzeichnenden Teil des Anspruchs 3 angegebenen Merkmale gelöst.

Gemäß dem Verfahren wird mit dem Einschalten der Stromversorgungseinheit die die Zwischenkreisspannung und die Akkuspannung entkoppelnde Diode auf ihre Funktionsfähigkeit hin überwacht, indem eine Prüfspannung über einen Vorwiderstand an die entkoppelnde Diode angelegt und kontrolliert wird, ob sich an der entkoppelnden Diode eine Sperrspannung aufbaut. Im Betriebszustand der Stromversorgungseinheit wird die entkoppelnde Diode dadurch auf ihre Funktionsfähigkeit hin überwacht, daß bei einer defekten entkoppelnden Diode eine aus der Akkuspannung abgeleitete und mit einem vorgegebenen Multiplikationsfaktor erhöhte Spannung höher ist als die Zwischenkreisspannung und damit eine entsprechende Vergleichsschaltung mm Ansprechen gebracht wird.

Gemäß der Schaltungsanordnung wird die Aufgabe im Einschaltzustand der Stromversorgungseinheit dadurch gelöst, daß eine Widerstandsschaltung vorgesehen ist, durch die eine Prüfspannung an die entkoppelnde Diode angelegt wird, daß eine Ausschaltschaltung vorgesehen ist, die zwischenzeitlich die Ladeschaltung für den Akkumulator abschaltet, und daß ein Komparator vorgesehen ist, der überprüft, ob sich an der entkoppelnden Diode eine Sperrspannung aufbaut.

Vorteilhafte Ausgestaltungen der Erfindung sind Gegenstand von Unteransprüchen.

Für das Verfahren sind das Maßnahmen, durch die ein abwechselndes An- und Abschalten des Akkumulators in einer Übergangsphase zwischen einem Netz- und einem Akkumulatorbetrieb der Stromversorgungseinheit verhindert wird.

Für die Schaltungsanordnung ist das im wesentlichen zum einen eine Subtrahierschaltung mit einer Spannungsanhebefunktion in Verbindung mit einem Komparator und einem logischen Gatter, durch die die entkoppelnde Diode auch im Betriebszustand der Stromversorgungseinheit auf vorhandene Funktionsfähigkeit hin überwacht wird, und zum anderen eine Integrationsschaltung, durch die verhindert wird, daß der Akkumulator in der Übergangsphase phase zwischen Netz- und Akkumulatorbetrieb der Stromversorgungseinheit stetig an- und abgeschaltet wird.

Nachfolgend wird ein Ausführungsbeispiel der Erfindung anhand einer Zeichnung näher erläutert.

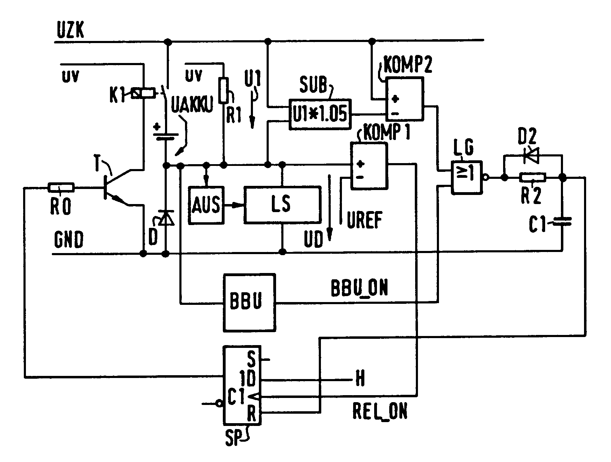

In der Zeichnung sind eine Serienschaltung mit einem steuerbaren Schalter K1, einem Akkumulator, über dem eine Akkumulatorspannung UAKKU ansteht,und eine entkoppelnde Diode D dargestellt. Die angegebene Serienschaltung ist zwischen einem Strang mit einer Zwischenkreisspannung UZK und einem Strang mit einem Bezugspotential GND angeordnet. Die entkoppelnde Diode D ist in Sperrichtung gepolt geschaltet und entkoppelt die Zwischenkreisspannung UZK und die Akkuspannung UAKKU, solange bei eingeschaltetem steuerbaren Schalter K1 die Zwischenkreisspannung UZK größer ist als die Akkuspannung UAKKU.

Der steuerbare Schalter K1 ist durch ein Relais gebildet, das an einer Versorgungsspannung UV angeschlossen ist und über einen Halbleiterschalter T aktiv bzw. inaktiv geschaltet wird. Der Halbleiterschalter T weist dabei steuereingangsseitig einen Vorwiderstand R0 auf. Die Versorgungsspannung UV beträgt beispielsweise 12 Volt.

Zwischen dem Akkumulator und der entkoppelnden Diode D ist eine Ladeschaltung LS angeschlossen, die weiter auf das Bezugspotential GND geschaltet ist. Zwischen dem Akkumulator und der entkoppelnden Diode D ist ferner eine an sich bekannte Batteriesicherungslogik BBU angeschlossen, die erkennt, ob der Akkumulator geladen oder entladen wird und dazu ein entsprechendes Signal BBU_ON erzeugt.

Die bis hier beschriebene Schaltungsanordnung stellt den Stand der Technik dar.

Zwischen dem Akkumulator und der entkoppelnden Diode D ist eine Widerstandsschaltung R1 angeschlossen, an die eine Prüfspannung UV angeschlossen ist. Im vorliegenden Fall ist die Prüfspannung UV mit der Versorgungsspannung UV des Relais identisch, weshalb sie hier gleich bezeichnet sind.

Zwischen dem Akkumulator und der entkoppelnden Diode D ist weiter eine Ausschaltschaltung AUS angeschlossen, die mit der Ladeschaltung LS verbunden ist. Außerdem ist zwischen dem Akkumulator und der entkoppelnden Diode D mit einem positiven Eingang ein erster Komparator KOMP1 angeschlossen, der einen negativen Eingang aufweist, an den eine Referenzsspannung UREF angeschaltet ist. Ein Ausgang des ersten Komparators KOMP1 ist mit einem Takteingang einer Speicherlogik SP verbunden. Auf dieser Verbindungsleitung wird ein Signal übertragen, das mit REL_ON bezeichnet ist.

Zwischen dem Akkumulator und der entkoppelnden Diode D ist eine auf die Zwischenkreisspannung UZK bezogen geschaltete Subtrahierschaltung SUB mit einer Ausgangsspannungsanhebefunktion entsprechend einem vorgegebenen Multiplikationsfaktor angeschlossen. Ein Ausgang der Subtrahierschaltung SUB ist mit einem negativen Eingang eines zweiten Komparators KOMP2 verbunden. Der zweite Komparator KOMP2 wird über einen positiven Eingang mit der Zwischenkreisspannung UZK versorgt. Ein Ausgang des zweiten Komparators KOMP2 ist mit einem Eingang eines logischen Gatters LG verbunden, das einen zweiten Eingang aufweist, der mit dem Ausgang der Batteriesicherungslogik BBU verbunden ist. Bei dem logischen Gatter LG handelt es sich im vorliegenden Fall um ein logisches NOR-Gatter.

Ein Ausgang des logischen Gatters LG ist über eine Integrationsschaltung bestehend aus einem Widerstand R2, einem Kondensator C1 und einer Diode D2 mit einem Rücksetzeingang der Speicherlogik SP verbunden.

Bei einem durch das Signal REL_ON initiierten Durchschalten des Signals H wird der steuerbare Schalter K1 angeschaltet.

Ein nichtinvertierter Ausgang der Speicherlogik SP ist mit dem Steuereingang des Halbleiterschalters T verbunden.

Beim Start der Stromversorgungseinheit wird die Prüfspannung UV über die Widerstandsschaltung R1 an die entkoppelnde Diode D angelegt. Damit die Ladeschaltung LS nicht den Strom der Prüfschaltung bestehend aus der Widerstandsschaltung R1 und dem ersten Komparator KOMP1 ableitet, ist sie mit der Ausschaltschaltung AUS ergänzt. Die Ausschaltschaltung AUS schaltet die Ladeschaltung LS unterhalb einer vorgegebenen Schwellspannung von z.B. 3 Volt ab. Bei funktionsfähiger entkoppelnder Diode D und ausgeschaltetem steuerbaren Schalter K1 stellt sich die angegebene Schwellspannung der Ladeschaltung LS an der Kathode der entkoppelnden Diode D ein. Diese Spannung stellt damit ein Einschaltkriterium für den steuerbaren Schalter K1 dar und wird von dem ersten Komparator KOMP1 ausgewertet. Die durch die Referenzspannung UREF gebildete Vergleichsspannung liegt zwischen der angesprochenen Schwellspannung und 0 Volt, um eine kurzgeschlossene entkoppelnde Diode D erkennen zu können. Mit dem Ausgangssignal REL_ON des ersten Komparators KOMP1 wird die Speicherlogik SP über den Takt- und Dateneingang angesteuert, die den steuerbaren Schalter K1 freigibt.

Um im Betriebszustand der Stromversorgungseinheit die entkoppelnde Diode D zu überwachen, wird die Zwischenkreisspannung UZK mit einer Spannung U1 verglichen, die sich zwischen dem die Zwischenkreisspannung UZK führenden Strang und dem Punkt zwischen dem Akkumulator und der entkoppelnden Diode D ergibt. Die Spannung U1 entspricht der Akkumulatorspannung UAKKU, wenn der steuerbare Schalter K1 eingeschaltet ist. Die Spannung U1 wird durch die Subtrahierschaltung mit Ausgangsspannungsanhebefunktion mit einem Multiplikationsfaktor von mindestens 1,05 multipliziert, d.h., sie wird um mindestens 5% angehoben. Dabei wird sie auf Masse bezogen und im zweiten Komparator KOMP2 mit der Zwischenkreisspannung UZK verglichen.

Wenn die Zwischenkreisspannung dann mindestens 5% größer ist als die Akkuspannung UAKKU, meldet die Schaltungsanordnung eine intakte entkoppelnde Diode D.

Diese Bedingung gilt nicht, wenn eine Akkumulatorstromentnahme gegeben ist, d.h. bei Netzausfall. In diesem Fall signalisiert die Batteriesicherungslogik. BBU, daß dem Akkumulator Energie entnommen wird. Im einfachsten Fall steht das diesen Umstand anzeigende Signal BBU_ON durch Vergleich einer Diodenspannung UD, die die Spannung über der entkoppelnden Diode D angibt, mit einer Spannung von -0,3 Volt zur Verfügung. Wird diese Spannung unterschritten, leitet die entkoppelnde Diode D und es wird Strom aus dem Akkumulator entnommen. Mit diesem Signal wird das Diodenfehlersignal unterdrückt.

Im Übergangsbereich zwischen Netzbetrieb und Akkumulatorbetrieb entstehende An- und Abschaltimpulse für den steuerbaren Schalter K1, werden durch die durch das RC-Glied R2, C1, D2 gebildete Integrationsschaltung unterdrückt.

## Patentansprüche

1. Verfahren mm Überwachen einer eine Zwischenkreisspannung (UZK) und eine Akkuspannung (UAKKU) entkoppelnden Diode (D) in einer eine Zwischenkreisspannung (UZK) und eine Akkuspannung (UAKKU) als Pufferspannung aufweisenden batteriegepufferten Stromversorgungseinheit mit einer zwischen der Zwischenkreisspannung (UZK) und einem Bezugspotential (GND) angeordneten Serienschaltung eines steuerbaren Schalters (K1), eines Akkumulators und der entkoppelnden Diode (D), einer zwischen dem Akkumulator und der entkoppelnden Diode (D) angeschlossenen und auf das Bezugspotential (GND) bezogenen Ladeschaltung (LS) zum Laden des Akkumulators bei eingeschaltetem gesteuerten Schalter (K1) in einem Betriebszustand der Stromversorgungseinheit sowie mit einer Batteriesicherungslogik (BBU), die einen Ausgang aufweist für ein Signal (z.B. BBU_ON), das anzeigt, ob der Akkumulator gerade geladen oder entladen wird,
**dadurch gekennzeichnet,** daß in einem Einschaltzustand der Stromversorgungseinheit die Ladeschaltung (LS) gesperrt, eine Prüfspannung (UV) über einen Vorwiderstand (R1) in Sperrichtung an die entkoppelnde Diode (D) angelegt, ein Überschreiten eines Schwellwertes der Prüfspannung (UV) an der entkoppelnden Diode (D) kontrolliert, nach dem Überschreiten des Schwellwertes der steuerbare Schalter (K1) eingeschaltet und die Ladeschaltung (LS) wieder freigegeben wird, und daß im Betriebszustand der Stromversorgungseinheit eine der Akkuspannung (UAKKU) entsprechende Spannung (U1) erzeugt und diese um einen vorgegebenen Multiplikationsfaktor wenigstens geringfügig bis maximal annähernd die Zwischenkreisspannung (UZK) erreichend erhöht und dadurch bei einer kurzgeschlossenen entkoppelnden Diode (D) mit damit zusammenhängenden Zusammenbruch der Zwischenkreisspannung (UZK) der Wert der erhöhten Spannung über den Wert der Zwischenkreisspannung (UZK) gesetzt wird, woraufhin der steuerbare Schalter (K1) und damit der Akkumulator abgeschaltet wird.

2. Verfahren nach Anspruch 1,
**dadurch gekennzeichnet,** daß in einem Übergangsbereich zwischen einem Netzbetrieb und einem Akkumulatorbetrieb der Stromversorgungseinheit entstehende Ein- und Ausschaltimpulse für den steuerbaren Schalter (K1) unterdrückt werden.

3. Schaltungsanordnung zum Überwachen einer eine Zwischenkreisspannung (UZK) und eine Akkuspannung (UAKKU) entkoppelnden Diode (D) in einer eine Zwischenkreisspannung (UZK) und eine Akkuspannung (UAKKU) als Pufferspannung aufweisenden batteriegepufferten Stromversorgungseinheit mit einer zwischen der Zwischenkreisspannung (UZK) und einem Bezugspotential (GND) angeordneten Serienschaltung eines steuerbaren Schalters (K1), eines Akkumulators und der entkoppelnden Diode (D), einer zwischen dem Akkumulator und der entkoppelnden Diode (D) angeschlossenen und auf das Bezugspotential (GND) bezogenen Ladeschaltung (LS) zum Laden des Akkumulators bei eingeschaltetem gesteuerten Schalter (K1) in einem Betriebszustand der Stromversorgungseinheit sowie mit einer Batteriesicherungslogik (BBU), die einen Ausgang aufweist für ein Signal (z.B. BBU_ON), das anzeigt, ob der Akkumulator gerade geladen oder entladen wird,
**dadurch gekennzeichnet,** daß zwischen dem Akkumulator und der entkoppelnden Diode (D) eine mit der Prüfspannung (UV) verbundene Widerstandsschaltung (R1), eine mit der Ladeschaltung (LS) verbundene Ausschaltschaltung (AUS) zum Ausschalten der Ladeschaltung (LS) und ein mit einer Referenzspannung (UREF) verbundener erster Komparator (KOMP1) angeschlossen sind, von denen der erste Komparator (KOMP1) einen Ausgang aufweist für ein zum Einschalten des steuerbaren Schalters (K1) dienendes Steuersignal (REL_ON), das einem Steuereingang des steuerbaren Schalters (K1) zugeordnet ist.

4. Schaltungsanordnung nach Anspruch 3,
**dadurch gekennzeichnet,** daß zwischen dem Akkumulator und der entkoppelnden Diode (D) eine auf die Zwischenkreisspannung (UZK) bezogen geschaltete Subtrahierschaltung (SUB) mit einer Ausgangsspannungsanhebefunktion entsprechend einem vorgegebenen Multiplikationsfaktor angeschlossen ist, die mit einem Ausgang mit einem mit der Zwischenkreisspannung (UZK) verbundenen zweiten Komparator (KOMP2) verbunden ist, der mit einem Ausgang mit einem logischen Gatter (LG) verbunden ist, das daneben mit dem Ausgang der Batteriesicherungslogik (BBU) verbunden ist und jeweils die Signale des zweiten Komparators (KOMP2) und der Batteriesicherungslogik (BBU) einem zugehörigen gemeinsamen Ausgang für ein zum Ausschalten des steuerbaren Schalters (K1) dienendes Steuersignal zuordnet.

5. Schaltungsanordnung nach Anspruch 4,
**dadurch gekennzeichnet,** daß eine Speicherlogic (SP) zum Speichern des jeweils letzten Signals entweder des logischen Gatters (LG) oder des ersten Komparators (KOMP1) vorgesehen ist, die einen Ausgang für das jeweils zuletzt gespeicherte Signal aufweist, der dem Steuereingang des steuerbaren Schalters (K1) zugeordnet ist.

6. Schaltungsanordnung nach Anspruch 5,
**dadurch gekennzeichnet,** daß die Speicherlogik (SP) als Flip-Flop-Schaltung ausgebildeet ist mit einem mit dem ersten Komparator (KOMP1) verbundenen Takt-Eingang, einem mit dem Ausgang des logischen Gatters (LG) verbundenen Rücksetz-Eingang und einem Daten-Eingang, dem ein Signal (H) zugeordnet ist, das den steuerbaren Schalter (K1) ansteuert, wenn die Flip-Flop-Schaltung durch das vom ersten Komparator (KOMP1) erzeugte Steuersignal (REL_ON) zum Durchschalten angeregt wird.

7. Schaltungsanordnung nach einem der Ansprüche 4 bis 6,
**dadurch gekennzeichnet,** daß der Ausbildung des logischen Gatters (LG) eine logische NOR-Funktion zugrundeliegt.

8. Schaltungsanordnung nach einem der Ansprüche 4 bis 7,
**dadurch gekennzeichnet,** daß der der Subtrahierschaltung (SUB) für die Spannungsanhebefunktion zugrundeliegende Multiplikationsfaktor einen Betrag von mindestens 1,05 aufweist.

9. Schaltungsanordnung nach einem der Ansprüche 4 bis 8,
**dadurch gekennzeichnet,** daß dem logischen Gatter (LG) eine Integrationsschaltung (R2,C1,D2) nachgeschaltet ist.

## Claims

1. Method for monitoring a diode (D), which decouples an intermediate circuit voltage (UZK) and an accumulator voltage (UAKKU), in a battery-buffered power supply unit having an intermediate circuit voltage (UZK) and an accumulator voltage (UAKKU) as the buffer voltage, having a series circuit comprising a controllable switch (K1), an accumulator and the decoupling diode (D), which series circuit is arranged between the intermediate circuit voltage (UZK) and a reference potential (GND), having a charging circuit (LS), which is connected between the accumulator, and the decoupling diode (D), is referred to the reference potential (GND) and is used to charge the accumulator, when the controlled switch (K1) is switched on, in an operating state of the power supply unit, and also having a battery protection logic unit (BBU), which has an output for a signal (for example BBU_ON) which indicates whether the accumulator is currently being charged or discharged, characterized in that, in a switching-on state of the power supply unit, the charging circuit (LS) is inhibited, a test voltage (UV) is applied in the reverse direction to the decoupling diode (D) via a series resistor (R1), monitoring is carried out to see whether a threshold value of the test voltage (UV) across the decoupling diode (D) is exceeded, after the threshold value is exceeded the controllable switch (K1) is switched on and the charging circuit (LS) is enabled again, and in that, in the operating state of the power supply unit, a voltage (U1) which corresponds to the accumulator voltage (UAKKU) is generated and is increased by a predetermined multiplication factor at least slightly and reaching at most, approximately, the intermediate circuit voltage (UZK) and, as a result, in the event of a short-circuited decoupling diode (D) with the associated collapse of the intermediate circuit voltage (UZK), the value of the increased voltage is set above the value of the intermediate circuit voltage (UZK), whereupon the controllable switch (K1) and hence the accumulator are disconnected.

2. Method according to Claim 1, characterized in that switch-on and switch-off pulses for the controllable switch (K1) which are produced in a transition phase between a mains operation and an accumulator operation of the power supply unit are suppressed.

3. Circuit arrangement for monitoring a diode (D), which decouples an intermediate circuit voltage (UZK) and an accumulator voltage (UAKKU), in a battery-buffered power supply unit having an intermediate circuit voltage (UZK) and an accumulator voltage (UAKKU) as the buffer voltage, having a series circuit comprising a controllable switch (K1), an accumulator and the decoupling diode (D), which series circuit is arranged between the intermediate circuit voltage (UZK) and a reference potential (GND), having a charging circuit (LS), which is connected between the accumulator and the decoupling diode (D), is referred to the reference potential (GND) and is used to charge the accumulator, when the controlled switch (K1) is switched on, in an operating state of the power supply unit, and also having a battery protection logic unit (BBU), which has an output for a signal (for example BBU_ON) which indicates whether the accumulator is currently being charged or discharged, characterized in that there are connected between the accumulator and the decoupling diode (D) a resistor circuit (R1), which is connected to the test voltage (UV), a switching-off circuit (AUS), which is connected to the charging circuit (LS) and is used for switching off the charging circuit (LS), and a first comparator (KOMP1), which is connected to a reference voltage (UREF), of which the first comparator (KOMP1) has an output for a control signal (REL_ON) which is used for switching on the controllable switch (K1) and is assigned to a control input of the controllable switch (K1).

4. Circuit arrangement according to Claim 3, characterized in that there is connected between the accumulator and the decoupling diode (D) a subtraction circuit (SUB) which is connected with reference to the intermediate circuit voltage (UZK), has an output voltage elevation function in accordance with a predetermined multiplication factor and is connected by an output to a second comparator (KOMP2), which is connected to the intermediate circuit voltage (UZK) and is connected by an output to a logic gate (LG) which is additionally connected to the output of the battery protection logic unit (BBU) and in each case assigns the signals from the second comparator (KOMP2) and the battery protection logic unit (BBU) to an associated common output for a control signal which is used for switching off the controllable switch (K1).

5. Circuit arrangement according to Claim 4, characterized in that there is provided a storage logic unit (SP) for storing the respectively last signal either from the logic gate (LG) or from the first comparator (KOMP1), which storage logic unit has an output for the signal stored last in each case, which output is assigned to the control input of the controllable switch (K1).

6. Circuit arrangement according to Claim 5, characterized in that the storage logic unit (SP) is designed as a flip-flop circuit having a clock input which is connected to the first comparator (KOMP1), having a reset input which is connected to the output of the logic gate (LG) and having a data input to which there is assigned a signal (H) which drives the controllable switch (K1) when the flip-flop circuit is activated to switch through by means of the control signal (REL_ON) generated by the first comparator (KOMP1).

7. Circuit arrangement according to one of Claims 4 to 6, characterized in that the design of the logic gate (LG) is based on a logic NOR function.

8. Circuit arrangement according to one of Claims 4 to 7, characterized in that the multiplication factor which is the basis of the subtraction circuit (SUB) for the voltage elevation function is at least 1.05.

9. Circuit arrangement according to one of Claims 4 to 8, characterized in that an integration circuit (R2, C1, D2) is connected downstream of the logic gate (LG).

## Revendications

1. Procédé de contrôle d'une diode (D) qui réalise le découplage entre une tension (UZK) d'un circuit intermédiaire et une tension (UAKKU) d'un accumulateur, dans une unité d'alimentation en courant, à batterie tampon et ayant une tension de circuit intermédiaire (UZK) et une tension d'accumulateur (UAKKU) en tant que tension tampon, et comportant un circuit série situé entre la tension (UZK) du circuit intermédiaire et un potentiel de référence (GND) et formé d'un interrupteur commandable (K1), d'un accumulateur et de la diode de découplage (D), un circuit de charge (LS) branché entre l'accumulateur et la diode de découplage (D), rapporté au potentiel de référence (GND) et destiné à charger l'accumulateur lorsque l'interrupteur commandé (K1) est fermé, dans un état de fonctionnement de l'unité d'alimentation en courant, ainsi qu'un circuit logique (BBU) de protection de la batterie, qui comporte une sortie pour un signal (par exemple BBU_ON) indiquant si précisément on charge ou l'on décharge l'accumulateur,
caractérisé par le fait que lorsque l'unité d'alimentation en courant est à l'état conducteur, on bloque le circuit de charge (LS), on applique une tension de contrôle (UV) par l'intermédiaire d'une résistance en série (R1) dans le sens de blocage, à la diode de découplage (D), on contrôle un dépassement d'un seuil de la tension de contrôle (UV) aux bornes de la diode de découplage (D), on ferme l'interrupteur commandable (K1) après le dépassement du seuil, et on libère de nouveau le circuit de charge (LS), et, lorsque l'unité d'alimentation en courant est dans l'état de fonctionnement, on produit une tension (U1), qui correspond à la tension de l'accumulateur (UAKKU) et on augmente cette tension au moins légèrement, d'un facteur multiplicatif prescrit, jusqu'à atteindre au maximum approximativement la tension (UZK) du circuit intermédiaire, et de ce fait, lorsque la diode de découplage (D) est court-circuitée, et qu'ainsi la tension (UZK) du circuit intermédiaire s'annule, on fixe la valeur de la tension accrue au-dessus de la valeur de la tension (UZK) du circuit intermédiaire, ce qui ouvre l'interrupteur commandable (K1) et met hors circuit par conséquent l'accumulateur.

2. Procédé suivant la revendication 1, caractérisé par le fait que l'on supprime des impulsions de fermeture et d'ouverture de l'interrupteur commandable (K1), qui apparaissent dans la zone de transition entre le fonctionnement de l'unité d'alimentation en courant avec le réseau et son fonctionnement avec l'accumulateur.

3. Montage de contrôle d'une diode (D) qui réalise le découplage entre une tension (UZK) d'un circuit intermédiaire et une tension (UAKKU) d'un accumulateur, dans une unité d'alimentation en courant à batterie tampon et ayant une tension de circuit intermédiaire (UZK) et une tension d'accumulateur (UAKKU) en tant que tension tampon, et comportant un circuit série situé entre la tension (UZK) du circuit intermédiaire et un potentiel de référence (GND), formé d'un interrupteur commandable (K1), d'un accumulateur et de la diode de découplage (D), un circuit de charge (LS) branché entre l'accumulateur et la diode de découplage (D), rapporté au potentiel de référence (GND) et destiné à charger l'accumulateur lorsque l'interrupteur commandé (K1) est fermé, dans un état de fonctionnement de l'unité d'alimentation en courant, ainsi qu'un circuit logique (BBU) de protection de la batterie, qui comporte une sortie pour un signal (par exemple BBU_ON) indiquant si précisément l'on charge ou l'on décharge l'accumulateur, caractérisé par le fait qu'entre l'accumulateur et la diode de découplage (D) sont branchés un circuit de résistance (R1) relié à la tension de contrôle (UV), un circuit de coupure (AUS) relié au circuit de charge (LS) et destiné à couper le circuit de charge (LS), et un premier comparateur (KOMP1), relié à une tension de référence (UREF), le premier comparateur (KOMP) ayant une sortie destinée à un signal de commande (REL_ON), qui est utilisé pour fermer l'interrupteur commandable (K1) et qui est associé à une entrée de commande de l'interrupteur commandable (K1).

4. Montage suivant la revendication 3, caractérisé par le fait qu'entre l'accumulateur et la diode de découplage (D) est branché un circuit soustracteur (SUB) branché de manière rapportée à la tension (UZK) du circuit intermédiaire et comportant une fonction d'augmentation de la tension de sortie suivant un facteur multiplicatif prescrit, ce circuit étant relié, par une sortie, à un second comparateur (KOMP2) relié à la tension (UZK) du circuit intermédiaire et relié, par une sortie, à une porte logique (LG), qui est reliée, en outre, à la sortie du circuit logique (BBU) de protection de la batterie et associe respectivement les seconds signaux du second comparateur (KOMP2) et du circuit logique (BBU) de protection de la batterie à une sortie associée commune destinée à un signal de commande destiné à ouvrir l'interrupteur commandable (K1).

5. Montage suivant la revendication 4, caractérisé par le fait qu'il est prévu un circuit logique de mémoire (SP), qui est destiné à mémoriser le dernier signal soit de la porte logique (LG), soit du premier comparateur (KOMP1) et qui comporte une sortie, qui est destinée au signal mémorisé respectivement en dernier lieu et qui est associée à l'entrée de commande de l'interrupteur commandable (K1).

6. Montage suivant la revendication 5, caractérisé par le fait que le circuit logique de mémoire (SP) est sous la forme d'un circuit à bascule bistable comportant une entrée de cadence reliée au premier comparateur (KOMP1), une entrée de remise à l'état initial reliée à la sortie de la porte logique (LG) et une entrée de données, à laquelle est associé un signal (H), qui commande l'interrupteur commandable (K1), lorsque le circuit de la bascule bistable est placé à l'état passant par le signal de commande (REL_ON) produit par le premier comparateur (KOMP1).

7. Montage suivant l'une des revendications 4 à 6, caractérisé par le fait que l'agencement de la porte logique (LG) est basé sur une fonction logique NON-OU.

8. Montage suivant l'une des revendications 4 à 7, caractérisé par le fait que le facteur multiplicatif, qui est pris comme base pour le circuit soustracteur (SUB) pour la fonction d'augmentation de tension, a une valeur absolue égale à au moins 1,05.

9. Montage suivant l'une des revendications 4 à 8, caractérisé par le fait qu'un circuit intégrateur (R2,C1,C2) est branché en aval de la porte logique (LG).
